# EUROPEAN PATENT APPLICATION

(11) **EP 1 455 475 A2**
(43) Date of publication of application: **08.09.2004**
(21) Application number: 04005025.4
(22) Date of filing: 03.03.2004
(51) Int. Cl.: H04L 1/00, H04B 7/005

(54) **Data transmitting/receiving apparatus and method in wireless system**

(30) Priority: 06.03.2003 KR 2003014101
(71) Applicant: LG ELECTRONICS INC., Seoul (KR)
(72) Inventor: Kim, Jik-Dong, Dongan-Gu Anyang Gyeonggi-Do (KR)
(74) Representative: von Hellfeld, Axel, Dr. Dipl.-Phys.

(57) **Abstract**

A data transmitting/receiving apparatus and method in a wireless system are provided to enhance a performance by coupling a transmission power controlling method and an erasure-error correction method. If a channel environment is not good, transmission power is not allocated to prevent unnecessary transmission power consumption, and allowing each user to independently control transmission power and reduces multiple access interference. A channel state may be determined through a channel gain so that if a channel state is not good, a corresponding data symbol is regarded as an erasure symbol, and accordingly, a receiving end performs a demodulation by an erasure-error correction technique to restore data. Thus, a correction capability of a block code can be improved.

## Description

### BACKGROUND OF THE INVENTION

This disclosure claims priority from Korean Patent Application No. 14101/2003, filed March 6, 2003, the subject matter of which is incorporated herein by reference.

### 1. Field of the Invention

Embodiments of the present invention may relate to a wireless system. More particularly, embodiments of the present invention may relate to a data transmitting/receiving apparatus and method in a wireless system that combines a transmission power controlling method and an erasure-error correcting method.

### 2. Background of Related Art

In a wireless system, when data is transmitted and received between a sending end and a receiving end, the received data is frequently damaged when a transmission channel state becomes bad (or damaged) due to a time difference according to geographical features or in each path and spatial environment factors. In order to compensate for such damage occurring at the channel in data transmission and reception, a transmission power controlling method or an error correcting method may be used.

In the transmission power controlling method, the sending end and the receiving end may raise or drop the transmission power according to a channel situation (or based on channel performance) so that every terminal user can receive a same strength of a radio wave. This may help guarantee a uniform quality of service (QoS). More specifically, if the channel is in a good state (hereafter also called good), the transmission power may be lowered, whereas if the channel is not in a good state (hereafter also called bad), the transmission power may be raised.

The error correcting method may restore damaged received data as it occurs at the receiving end, for which a turbo-coding method or a block encoding method may be used.

However, since either the transmission power adjusting method or the error correcting method are separately used, advantages and disadvantages of both methods are not suitably adopted.

### SUMMARY OF THE INVENTION

An object of the invention is to solve at least the above problems and/or disadvantages and to provide at least the advantages described hereinafter.

Embodiments of the present invention may provide a data transmitting/ receiving apparatus and method in a wireless system capable of enhancing performance by coupling (or combining) a transmission power controlling method and an erasure-error correction method.

A data transmission apparatus in a wireless system may be provided that includes a Q-ary encoding unit to block-encode data to be transmitted and a modulating unit to receive each Q-ary symbol from the Q-ary encoding unit. The Q-ary encoding unit may modulate and output a modulated Q-ary symbol. An amplifying unit may amplify each modulated data to as high a target power for a channel gain and output the amplified data.

A data transmitting method may also be provided in a wireless system. This may include comparing channel gains in each sub-channel of transmission data with a prescribed (or predetermined) reference value to classify a channel as 'good' or 'bad'. If the channel is classified as 'bad', the corresponding data symbol is erased and transmission power is controlled to be '0' to stop data transmission, whereas if the channel is classified as 'good,' transmission power of all the sub-channels is controlled to be 'P,' for example.

Embodiments of the present invention may also provide a data receiving apparatus in a wireless system that includes a demodulating unit for demodulating a signal received by each sub-channel and outputting a Q-ary symbol. A Q-ary decoding unit may perform a block decoding on a Q-ary symbol of each sub-channel output from the demodulating unit.

A data receiving method may also be provided in a wireless system that includes comparing channel gains of transmission data for each sub-channel with a prescribed (or predetermined) reference value to classify a channel as 'good' or 'bad'. If the channel is in the 'bad' state, it may be determined that a corresponding data symbol has been erased and the symbol is stored. On the other hand, if the channel is in a 'good' state, a demodulation may be performed on the data symbol and the demodulated symbol may be stored. The stored symbols may be collected to form a packet unit. A demodulation may be performed according to an erasure-error correction method to restore data.

The channel gain value may be shared by channels, detected by a receiving end and informed to a sending end through a feedback channel, or estimated through a value detected in a previous data transmission.

Additional advantages, objects, features and embodiments of the present invention may be set forth in part in the description that follows and in part will become apparent to those having ordinary skill in the art upon examination of the following or may be learned from practice of the invention.

### BRIEF DESCRIPTION OF THE DRAWINGS

The following represents brief descriptions of the drawings in which like reference numerals refer to like elements and wherein:

Figure 1 illustrates a construction of a data transmitter in a wireless system in accordance with an example embodiment of the present invention;

Figure 2 is a flow chart of a data transmitting method in a wireless system in accordance with an example embodiment of the present invention;

Figure 3 illustrates a data receiving apparatus in a wireless system in accordance with an example embodiment of the present invention; and

Figure 4 is a flow chart of a data receiving method in a wireless system in accordance with an example embodiment of the present invention.

### DETAILED DESCRIPTION OF PREFERRED EMBODIMENTS

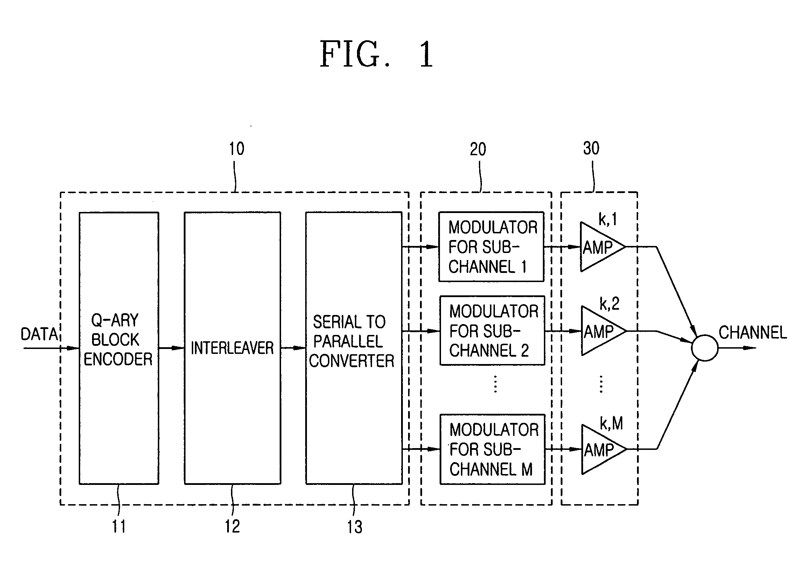

Figure 1 illustrates a construction of a data transmitter in a wireless system in accordance with an example embodiment of the present invention. Other embodiments and configurations are also within the scope of the present invention.

As shown in Figure 1, a data transmitting apparatus in a wireless system may include a Q-ary encoding unit 10, a modulating unit 20 and an amplifying unit 30. The Q-ary encoding unit 10 may block-encode data to be transmitted. The modulating unit 20 may modulate each Q-ary symbol output from the Q-ary encoding unit 10 and output sub-channel data. The amplifying unit 30 may amplify each modulated sub-channel data to as high a target power for a channel gain and output the amplified data.

The Q-ary encoding unit 10 may include a Q-ary block encoder 11, an interleaver 12 and a serial-to-parallel converter 13. The Q-ary block encoder 11 may add a redundancy to an information sequence block of to-be-transmitted data and map the data to a code sequence block having a greater number of bits. The interleaver 12 may interleave the mapped data symbol to prevent an error on a channel. The serial-to-parallel converter 13 may convert the interleaved serial Q-ary code symbol into an M-parallel bit and output the bits to each sub-channel. 'Q' may be a multiple of '2' and 'M' is log₂Q and indicates a number of sub-channels. For example, in an 8-ary in which Q is 8, since 'M' is log₂8=3, the number of sub-channels may be 3.

The modulating unit 20 may include a modulator for each of the sub-channels to modulate Q-ary symbols of each Q-ary symbol and output them.

The amplifying unit 30 may include an amplifier for each of the sub-channels to amplify each sub-channel to a target power for a channel gain and output the amplified signals.

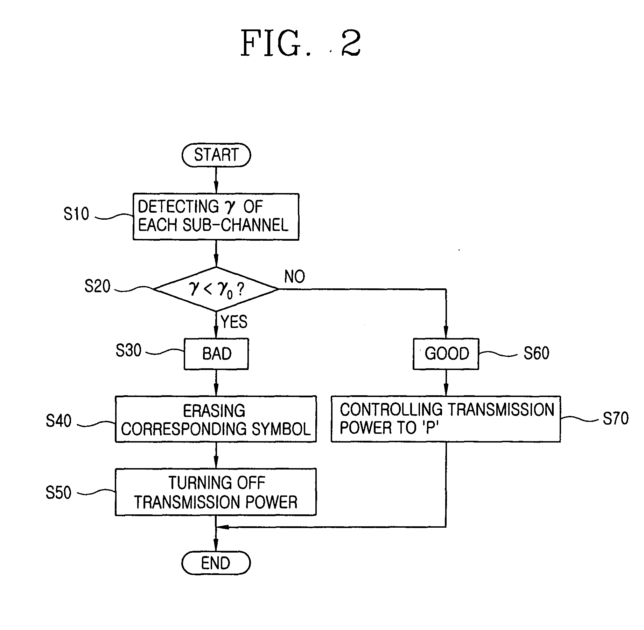

Figure 2 is a flow chart of a data transmitting method in a wireless system in accordance with an example embodiment of the present invention. Other operations, orders of operations and embodiments are also within the scope of the present invention.

Figure 2 shows that a sending end detects channel gains (γᵢ) of to-be-transmitted data for each sub-channel (step S10). The channel gains (γᵢ) are obtained through a feedback channel by a receiving end, obtained by being shared between channels, or estimated from a value detected in a previous data transmission.

The detected channel gains (γᵢ) may be compared with a certain (or predetermined) reference value (γ₀) (step S20). If one channel gain for all the sub-channels is smaller than the reference value (γ₀), then a corresponding channel is determined to be in a bad state and classified as 'BAD' (step S30). A corresponding data symbol is erased (step S40) and data transmission may be interrupted by making the transmission power '0' (step S50). In other words, it may be determined that there would be an error in data transmission, so therefore the data transmission is not even made. Even though the sending end does not transmit data, the receiving end can estimate the data that has not been transmitted through sharing information among wireless channels.

If, however, all the channel gains (γᵢ) in every sub-channel are greater than or the same as the reference value (γ₀), the corresponding channel is determined to be in a good state and classified as 'GOOD' (step S60). The transmission power of the corresponding channel is set as 'P' (step S70). 'P' may be a constant or a function related to the channel gain (γᵢ) and may include a target power value calculated as the receiving end feeds back a measured channel gain to the sending end. The above process may be simplified as follows:

(γᵢ) < (γ₀) → BAD → erasing corresponding symbol and transmission power = 0 (for some, i, i∈{1, 2, ...., M})

(γᵢ) ≥ (γ₀) → GOOD → not erasing corresponding symbol and transmission power = P (for all i, i∈{1, 2, ...., M}), wherein 'P' is a constant or a function of γ_{i.}

Namely, in consideration of an ON-OFF channel inversion power control method, if a channel condition is not good, the transmission power may be allocated to '0' to prevent data transmission, and for an error generated in this case, the corresponding symbol may be designated as an erasure symbol to thereby enhance a correction capability of a block code. The erasure-error correction may be better than a general error correction, and the block code can correct double erasure symbols of the error.

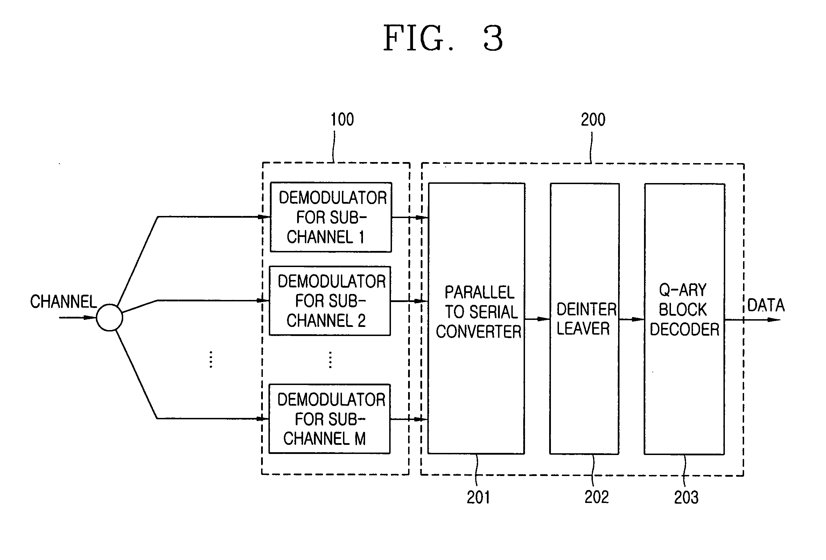

Figure 3 illustrates a data receiving apparatus in a wireless system in accordance with an example embodiment of the present invention. Other embodiments and configurations are also within the scope of the present invention.

As shown in Figure 3, a data receiving apparatus in the wireless system may include a demodulating unit 100 and a Q-ary decoding unit 200. The demodulating unit 100 may demodulate a signal received by each sub-channel and output a Q-ary symbol. A Q-ary decoding unit 200 may perform a block decoding on the Q-ary symbol of each sub-channel output from the demodulating unit 100.

The demodulating unit 100 may include a plurality of demodulators for all of the sub-channels so as to demodulate signals received by each sub-channel and appropriately output the signals.

The Q-ary decoding unit 200 may include a parallel-to-serial converter 201 for converting Q-ary symbols that are input in parallel bits for the plurality of sub-channels into serial bit Q-ary symbols. The parallel-to-serial converter 201 may output the bits to a deinterleaver 202 for performing a deinterleaving on the Q-ary symbols. A Q-ary block decoder 203 may perform an erasure-error correction on the deinterleaved symbol data to restore transmission data.

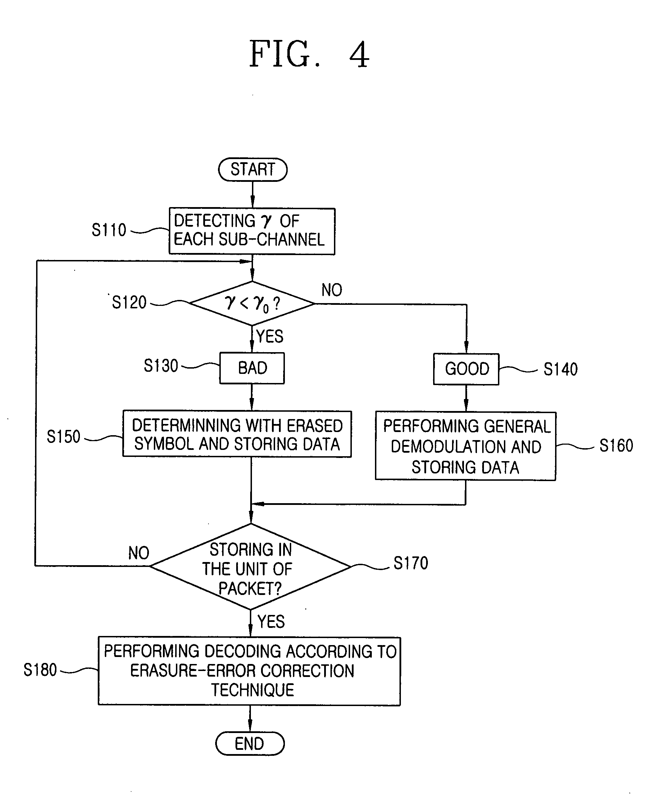

Figure 4 is a flow chart of a data receiving method in a wireless system in accordance with an example embodiment of the present invention. Other operations, orders of operations and embodiments are also within the scope of the present invention.

In Figure 4, channel gains (γ) of received data in each sub-channel are detected (step S110). The detected channel gains (γᵢ) are compared with a prescribed (or predetermined) reference value (γ₀) (step S120).

If even one channel gain of the plurality of sub-channels is smaller than the reference value (γ₀), a corresponding channel is determined to be in a bad state and classified as 'BAD' (step S130). If, however, all the channel gains (γᵢ) of every sub-channel are greater than or the same as the reference value (γ₀), the corresponding channel is determined to be in a good state and classified as 'GOOD' (step S140).

If the classified channel state is 'BAD', it is determined the corresponding data symbol has been erased and data is stored (step S150). If the classified channel state is 'GOOD', a demodulation is performed on a corresponding data symbol and the data is stored (step 160).

Thereafter, when data are collected to form a packet (step S170), a demodulation is performed according to the erasure-error correction to restore data in the packet unit (step S180).

The above-described data transmitting/receiving apparatus and method in the wireless system has many advantages. For example, by considering the ON-OFF channel inversion power controlling method, if a channel is in a bad state, transmission power can be saved, and because each user controls transmission power independently with respect to other users, an average multiple access interference can be reduced.

In addition, since a symbol having a high error occurrence probability is designated as an erasure symbol through channel gains and the receiving end restores data through demodulation according to the erasure-error correction method, the correction capability of the block code can be enhanced.

The foregoing embodiments, advantages and objects are merely exemplary and are not to be construed as limiting the present invention. The present teaching can be readily applied to other types of apparatuses. The above description is intended to be illustrative, and not to limit the scope of the claims. Many alternatives, modifications, and variations will be apparent to those skilled in the art.

## Claims

1. A data transmission apparatus in a wireless system comprising:
a Q-ary encoding unit to block-encode data to be transmitted;
a modulating unit to receive each Q-ary symbol from the Q-ary encoding unit, the modulating unit to output modulated Q-ary symbols; and
an amplifying unit to amplify each modulated data to a target power for a channel gain and output the amplified data.

2. The apparatus of claim 1, wherein the Q-ary encoding unit comprises:
a Q-ary block encoder to add a redundancy to an information sequence block of data and map the data to a code sequence block;
an interleaver to interleave the mapped data symbol to prevent an error on a channel; and
a serial-to-parallel converter to convert the interleaved serial Q-ary code symbol into M-parallel bits and output the bits to the sub-channels.

3. The apparatus of claim 1, wherein the modulating unit modulates each Q-ary symbol and outputs modulated Q-ary symbols.

4. The apparatus of claim 1, wherein the modulating unit includes a plurality of modulators each corresponding to one of a plurality of sub-channels.

5. The apparatus of claim 1, wherein the amplifying unit amplifies data of each sub-channel up to the target power for a channel gain.

6. The apparatus of claim 1, wherein the amplifying unit includes a plurality of amplifiers each corresponding to one of a plurality of sub-channels.

7. A data transmitting method in a wireless system comprising:
comparing detected channel gains with a reference value to classify a corresponding channel as one of a 'GOOD' state and a 'BAD' state; and
controlling transmission power of the corresponding channel based on the classified state.

8. The method of claim 7, wherein the channel gain is obtained through one of: a feedback channel from a receiving end, sharing between channels, and estimated from a value detected in a previous data transmission.

9. The method of claim 7, wherein the channel is classified as the 'GOOD' state if channel gains of sub-channels are greater than or the same as a reference value.

10. The method of claim 7, wherein the channel is classified as the 'BAD' state if one of channel gains of the sub-channels is smaller than the reference value.

11. The method of claim 7, further comprising:
erasing a corresponding data symbol if a channel state is classified as the 'BAD' state.

12. The method of claim 7, wherein if a corresponding channel is in the 'BAD' state, transmission power is controlled to be '0.'

13. The method of claim 7, wherein if a corresponding channel is in the 'GOOD' state, the transmission power is controlled to be 'P'.

14. The method of claim 13, wherein 'P' is a constant or a function of a channel gain and includes target receiving power that has been fed back from a receiving end.

15. A data receiving apparatus in a wireless system comprising:
a demodulating unit to demodulate a signal received by each sub-channel and output a Q-ary symbol; and
a Q-ary decoding unit to perform a block decoding on a Q-ary symbol of each sub-channel output from the demodulating unit.

16. The apparatus of claim 15, wherein the demodulating unit includes a plurality of demodulators each corresponding to one of the sub-channels, the demodulators demodulating signals received by each sub-channel to Q-ary symbols, and outputting the demodulated Q-ary symbols.

17. The apparatus of claim 15, wherein the Q-ary decoding unit comprises:
a parallel-to-serial converter to convert Q-ary symbols input in parallel bits corresponding to a number of sub-channels into serial bit Q-ary symbols and outputting the serial bit Q-ary symbols;
a deinterleaver to perform a deinterleaving on the Q-ary symbols; and
a Q-ary block decoder to restore transmission data from the deinterleaved data.

18. The apparatus of claim 17, wherein the Q-ary block decoder restores the transmission data by performing an erasure-error correction on the deinterleaved symbol data to restore transmission data

19. A data receiving method in a wireless system comprising:
comparing channel gains of each sub-channel for transmission data with a reference value so as to classify the channels as one of 'GOOD' and 'BAD';
storing data symbols according to the classification; and
demodulating according to an erasure-error correction method so as to restore data.

20. The method of claim 19, wherein if all the channel gains of every sub-channel are equal to or greater than the reference value, the corresponding channel is classified as 'GOOD'.

21. The method of claim 19, wherein if one of the channel gains of the sub-channels is smaller than the reference value, the corresponding channel is classified as 'BAD'.

22. The method of claim 19, wherein if a corresponding channel state is classified as 'BAD', the corresponding data symbol is determined to have been erased and the data is stored.

23. The method of claim 19, wherein if a corresponding channel state is classified as 'GOOD', the data is demodulated according to a demodulation method and then stored.

24. The method of claim 19, wherein the demodulating stores symbols in a packet.

25. A method of controlling transmission in a wireless system comprising:
determining if a channel is in a 'GOOD' state or a 'BAD' state based on channel gains; and
correcting for the 'BAD' state if the channel is determined to be in the 'BAD' state.

26. The method of claim 25, wherein correcting for the 'BAD' state comprises changing transmission power of the channel.

27. The method of claim 25, wherein correcting for the 'BAD' state comprises performing decoding according to an erasure-error correction technique.

28. An apparatus for use in a wireless system comprising:
a first device to send and receive wireless data; and
a second device to determine if a channel is in a 'GOOD' state or a 'BAD' state based on channel gains and to correct for the 'BAD' state if the channel is determined to be in the 'BAD' state.

29. The apparatus of claim 28, wherein the second device corrects for the 'BAD' state by changing transmission power of the channel.

30. The apparatus of claim 28, wherein the second device corrects for the 'BAD' state by performing decoding according to an erasure-error correction technique.
